# EUROPEAN PATENT APPLICATION

(11) **EP 4 235 096 A1**
(43) Date of publication of application: **30.08.2023**
(21) Application number: 22212092.5
(22) Date of filing: 08.12.2022
(51) Int. Cl.: G01C 15/00

(54) **LASER LEVEL WITH IMPROVED VISABILITY**

(30) Priority: 17.12.2021 US 202163265644 P
(71) Applicant: Stanley Black & Decker, Inc., New Britain, CT 06053 (US)
(72) Inventor: WHITE, Daniel J., Baldwin, 21013 (US); RAMIREZ, Jose G., Towson, 21286 (US); SCHERBARTH, Douglas E., Hampstead, 21074 (US); SEMAN, Andrew E., Pylesville, 21132 (US); KONG, Andy, Suzhou (CN); JIANG, Jia Yong, Suzhou (CN); SCHMITTDIEL, Mike, Baltimore, 21231 (US); AGARWAL, Akash, Towson, 21286 (US); RING, JB, Vienna, 22180 (US); AGADI, Eshaan, Towson, 21286 (US)
(74) Representative: SBD IPAdmin

(57) **Abstract**

A construction laser level includes a housing and a gimbal assembly disposed in the housing. The gimbal assembly includes a first laser generator operable to generate a first output beam. The first output beam projects outside of the housing onto a target surface. The gimbal assembly includes a second laser generator operable to generate a second output beam. The second output beam projects outside of the housing onto the target surface. The first output beam projects as a first line on the target surface. The second output beam projects as a second line on the target surface. The first line is generally perpendicular to the second line. A wavelength of the first output beam is in the range of 540 to 575 nanometers.

## Description

### FIELD OF THE INVENTION

The present disclosure relates to an improved laser line generating device for assisting with construction layout tasks.

### BACKGROUND

Current state of technology for consumer product construction line lasers is a low power (~1mW) visible InGaN (Indium Gallium Nitride) green lasers diode (wavelength varies from 510 to 535 nm).

Laser line generators are commonly used for construction layout. For example, laser line generators may be used to partition an open space in a commercial building into useable office areas. In this example, the construction laser level generates squared lines on a floor which are in turn used to construct walls or cubicles. At some later time, it may be desirable to transfer the squared lines from the floor to the ceiling or from the ceiling to the floor. In other instances, it may be desirable to generate squared lines on the ceiling and floor simultaneously. It is desired to provide an improved construction laser level for assisting with construction layout tasks.

This section provides background information related to the present disclosure which is not necessarily prior art.

### SUMMARY

According to an aspect, there is an exemplary embodiment of a construction laser level. The construction laser level includes a housing. A first laser generator is disposed in the housing and is operable to generate a first output beam. The first output beam projects outside of the housing. A second laser generator is also disposed in the housing and is operable to generate a second output beam. The second output beam projects outside of the housing. A wavelength of the first output beam is in the range of 537 to 580 nanometers.

A wavelength of the second output beam may be in the range of 537 to 580 nanometers.

A wavelength of the first output beam may be in the range of 540 to 575 nanometers.

A wavelength of the second output beam may be in the range of 540 to 575 nanometers.

A wavelength of the first output beam may be in the range of 545 to 565 nanometers.

A wavelength of the second output beam may be in the range of 545 to 565 nanometers.

A wavelength of the first output beam may be in the range of 550 to 560 nanometers.

A wavelength of the second output beam may be in the range of 550 to 560 nanometers.

The first output beam may be configured to be projected as a first line on a target surface.

The second output beam may be configured to be projected as a second line on a target surface.

The first laser generator may comprise a diode-pumped solid-state laser (DPSSL).

The second laser generator may comprise a diode-pumped solid-state laser (DPSSL).

According to an aspect, there is an exemplary embodiment of a construction laser level. The construction laser level includes a housing. A gimbal assembly is disposed in the housing. The gimbal assembly includes a laser generator operable to generate an output beam, the output beam projecting outside of the housing. The output beam is configured to be projected as a line on a target surface. A wavelength of the output beam is in the range of 540 to 575 nanometers.

The laser generator comprises a diode-pumped solid-state laser (DPSSL).

A wavelength of the output beam is in the range of 545 to 570 nanometers.

A wavelength of the output beam is in the range of 550 to 560 nanometers.

According to an aspect, there is an exemplary embodiment of a construction laser level. The construction laser level includes a housing. A gimbal assembly is disposed in the housing. The gimbal assembly includes a first laser generator operable to generate a first output beam, the first output beam projecting outside of the housing onto a target surface. The gimbal assembly includes a second laser generator operable to generate a second output beam, the second output beam projecting outside of the housing onto the target surface. The first output beam is configured to be projected as a first line on the target surface. The second output beam is configured to be projected as a second line on the target surface. The first line is generally perpendicular to the second line. A wavelength of the first output beam is in the range of 540 to 575 nanometers.

A wavelength of the second output beam may be in the range of 540 to 575 nanometers.

The first laser generator may comprise a diode-pumped solid-state laser (DPSSL).

The second laser generator may comprise a diode-pumped solid-state laser (DPSSL).

The wavelength of the first output beam may be in the range of 545 to 570 nanometers.

The wavelength of the second output beam may be in the range of 545 to 570 nanometers.

The wavelength of the first output beam may be in the range of 550 to 560 nanometers.

The wavelength of the second output beam may be in the range of 550 to 560 nanometers.

The construction laser level may be powered by an integral battery.

The construction laser level may be powered by a removable battery pack.

The construction laser level may be a rotary laser level.

The construction laser level may be a cross-line laser level.

The construction laser level may be a 3 x 360 laser level.

The construction laser level may be configured to provide layout reference lines in a construction setting.

The layout reference lines may include a vertical line and a horizontal line.

The construction laser level may be portable.

According to an aspect, there is an exemplary embodiment of a method of using a construction laser level. The method includes providing a construction laser level including a housing and first laser generator disposed in the housing and operable to generate a first output beam wherein a wavelength of the first output beam is in the range of 537 to 580 nanometers. The method may further include utilizing the construction laser level in construction layout tasks such as providing lines and dots on target surfaces, such as a floor, ceiling wall, beam or other construction surface.

The method may further including providing a second laser generator also disposed in the housing and is operable to generate a second output beam.

The first output beam may be a horizontal line.

The second output beam may be a vertical line.

A wavelength of the second output beam may be in the range of 537 to 580 nanometers.

A wavelength of the first output beam may be in the range of 540 to 575 nanometers.

A wavelength of the second output beam may be in the range of 540 to 575 nanometers.

A wavelength of the first output beam may be in the range of 545 to 565 nanometers.

A wavelength of the second output beam may be in the range of 545 to 565 nanometers.

The construction laser level may be powered by an integral battery.

The construction laser level may be powered by a removable battery pack.

The construction laser level may be a rotary laser level.

The construction laser level may be a cross-line laser level.

The construction laser level may be a 3 x 360 laser level.

The construction laser level may be portable.

The method may include providing the construction laser level at a first location and providing a horizontal and/or vertical line on a target surface or surfaces and moving the construction laser level to a second location and providing a horizontal and/or vertical line on a different location on the target surface or on a different target surface or surfaces.

### BRIEF DESCRIPTION OF THE DRAWINGSf

Fig. 1 is a perspective view of an exemplary embodiment of a construction laser level;
Fig 2 is an exploded view of laser modules for the exemplary embodiment of the construction laser level;
Fig. 3 is a perspective view of a laser assembly of the exemplary embodiment of the construction laser level;
Fig. 4 is a schematic view of a diode-pumped solid-state laser (DPSSL);
Fig. 5 is a drawing of laser lines; and
Fig. 6 is a diagrammatic view of a rotary laser level.

### DETAILED DESCRIPTION OF EXEMPLARY EMBODIMENTS

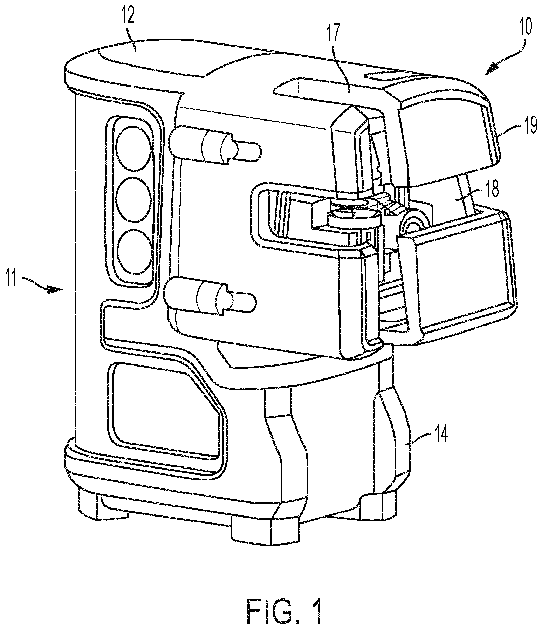

FIGS. 1-3 illustrate an exemplary embodiment of a construction laser level 10 that may be used for layout tasks in construction field. The laser line generating device 10 includes a housing 11. The housing 11 includes an upper housing 12 and a lower housing 14 which mate together. The housing also further includes a roll cage 19 and the housings 12, 14 and 19 form a cavity. The roll cage 19 includes an opening 17 through which laser beams can project. The opening is covered by a transparent member 18, such as a transparent glass or plastic. The opening 17 may be one continuous opening or may have multiple separate parts.

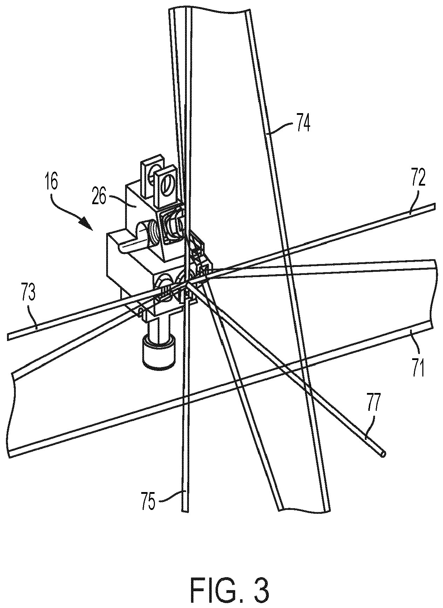

A laser assembly 16, shown in Fig. 3, is disposed in the cavity formed by the upper and lower housings 12, 14 and the roll cage 19. In an exemplary embodiment, the upper and lower housings 12, 14 are formed by injection molding using a suitable plastic material although other materials are contemplated by this disclosure. The roll cage of the exemplary embodiment is formed of metal, but may also be formed of other materials such as a hard plastic.

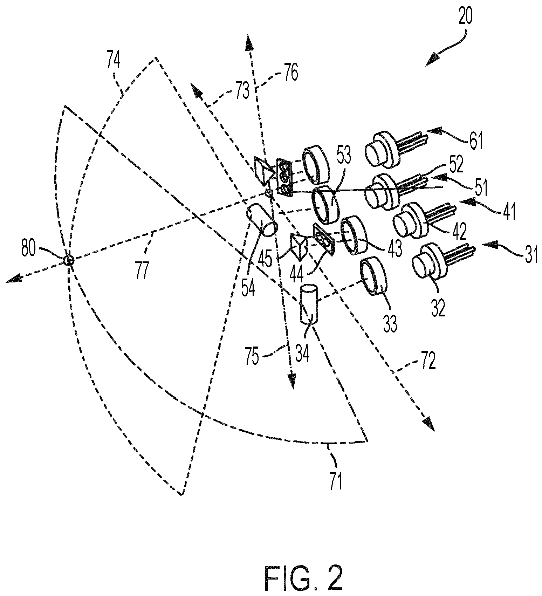

As shown in Fig. 3, the laser assembly includes a gimbal assembly 26. The gimbal assembly 26 holds a number of laser modules 20 (Fig. 2). Additionally, the gimbal assembly 26 is rotatable by gravity so that it levels the laser modules 20 so that they provide horizontal and vertical lines and dots. The gimbal assembly 26 may either be allowed to rotate to a level position so that it provides level horizontal and vertical lines or the gimbal assembly 26 may be locked in place so that it does not rotate. The laser modules 20 are operable to emit planes or dots of light through the transparent member 18.

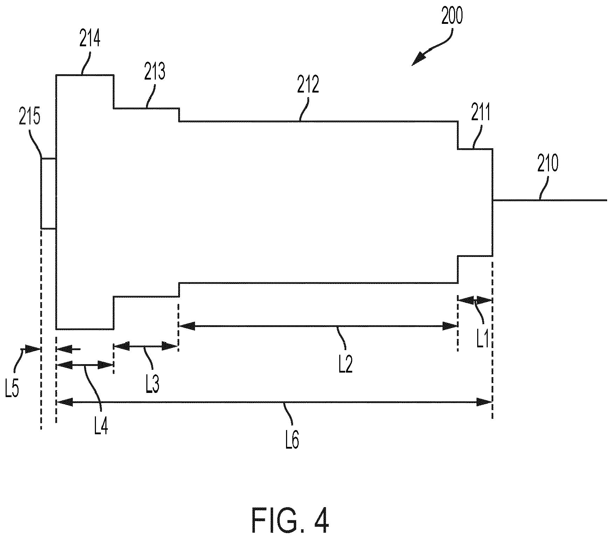

The laser modules 20 are shown in an exploded view without the gimbal assembly 26 in Fig. 2. As shown in Fig. 2, there are four laser modules 31, 41, 51 and 61. Laser module 31 includes a laser generator 32, a collimating lens 33 and a cylindrical lens 34. The laser module 31 outputs a horizontal line 71. The laser generator 32 outputs a laser beam. The collimating lens 33 collimates the beam and the cylindrical lens 34 converts the beam to the line output 71. The line 71 is a horizontal line when the laser generating device 10 is placed on a flat surface and the gimbal assembly 26 reaches its level position. Fig. 2 illustrates the laser generators as laser diodes laser 32, 42, 52 and 62. The laser generators 32, 42, 52 and 62 may instead be a diode-pumped solid-state laser (DPSSL), which will be described in greater detail with respect to Fig. 4.

Laser module 41 includes a laser diode 42, a collimating lens 43, a mask 44 and a beam splitter 45. The mask 44 provides two beams from the laser diode 42 by allowing only part of the collimated beam to pass through. The beam splitter 45 directs the two beams in opposite directions through the use of a mirrored surface to produce a dot producing beam 72 on one side and a dot producing beam 73 opposite the beam 72. This will create dots on opposite surfaces (i.e., left and right sides when the laser line generating device 10 is placed on a flat surface and the gimbal assembly 26 is free to move to a leveled position).

Laser module 51 includes a laser diode 52, a collimating lens 53 and a cylindrical lens 54. The laser module 51 outputs a vertical line 74. Laser module 61 includes a laser diode 62, a collimating lens 63, a mask 64 and a beam splitter 65. The mask 64 provides three beams from the laser diode 62 and the beam splitter 65 splits the beams to produce a downward projecting dot producing beam 75, an upward projecting dot producing beam 76 opposite the beam 75 and a forward projecting dot producing beam 77. This will create dots on opposite surfaces, such as a floor and a ceiling as well as a dot forward of the laser generating device 10.

As will be appreciated, the beams 71, 74 and 77 will all intersect at a point 80. Accordingly, the intensity of the three beams 71, 74 and 77 will be additive at that point 80. That is, the intensity of the beams at 80 will be greater than the intensity of any of the beams 71, 74 and 77 alone.

In the laser line generating device 10 of the exemplary embodiment, the individual laser diodes 32, 42, 52 and 62 can be turned on and off independently. For example, only the laser diode 32 can be turned on and the device 10 will produce only a horizontal line 71. At another time, the diode 32 and the diode 52 can be turned on and the diodes 42 and 62 can remain off. In that instance, the laser line generating device 10 will output horizontal line 71 and vertical line 74. Any combination of the laser diodes may be turned on at any particular time including any single diode or any combination of diodes. This can create a variety of lines and dots on target surfaces. The target surface may be any of a number of surfaces on which a user wishes to create a reference. For example, the target surface may be a floor, ceiling, beam, laser detector or other surface onto which the user wishes to direct the laser lines and dots.

When one of the laser diodes 20 are turned on, the diode is powered by pulse width modulation (PWM). With PWM, the diode is powered over a certain percentage of a cycle, called a duty cycle. If the diode is powered continuously, the duty cycle is 100%. If the diode is powered half of the time, the duty cycle is 50%. The powered state of the duty cycle can also be referred to as the high or on state and the unpowered portion of the duty cycle can be referred to the low or off state. The greater the duty cycle, the greater the intensity of the beam output from the laser diodes 20.

As discussed above, the laser generators of the present application may be in the form of a diode-pumped solid-state laser (DPSSL) and the laser diodes described in the application could be replaced with a DPSSL. A diode-pumped solid-state laser (DPSSL) is a solid-state laser made by pumping a solid gain medium, for example, a ruby or a neodymium-doped YAG crystal, with a laser diode. DPSSLs operate at a higher frequency and goes through a series of crystals to convert the frequency to a projected output frequency.

Fig. 4 illustrates a DPSSL module 200 that can be used as a laser generator in the exemplary embodiments of the present application. As shown, the module has a power input cord 210. This cord 210 may be in the form of wires or other electrical connectors. The cord 210 provides power from a power source, such as a battery. The module 200 has a body with multiple sections of various widths, including a rear section 211, a first intermediate section 212, a second intermediate section 213, a front section 214 and a projector section 215. A laser is projected from the module 200 at the projection section 215. The rear section 211 has a width of W1 and a length of L1. The first intermediate section 212 has a width of W2 and a length of L2. The second intermediate section 213 has a width of W3 and a length of L3. The front section 214 has a width of W4 and a length of L4. The projection section 215 has a width W5 and a length L5. The entire body has a length of L6.

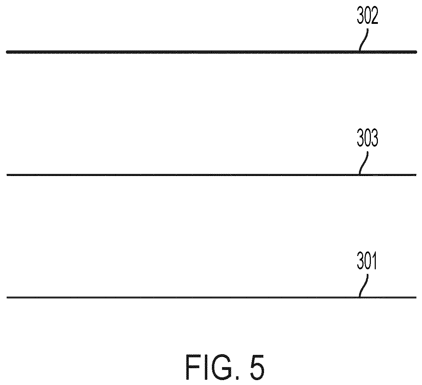

Fig. 5 illustrates three horizontal lines 301, 302 and 303. The horizontal line 301 is at a wavelength of approximately 520 nanometers (nm) such as is produced by prior art laser DEWALT DW088LG Green Cross Line Laser. Line 302 is at a higher wavelength of approximately 555 nm. Line 303 is at an even higher wavelength of 575 nm.

According to exemplary embodiments of the present application, a laser dot or line with a higher wavelength, such as various ranges of wavelength ranges around 555 nanometers, may be used in a construction laser level used for layout tasks associated with construction in order to provide better visualization of the line to a user in assisting with construction tasks. The user may more readily see lines or dots produced by the construction laser level. Additionally, this may allow a user to have the construction laser level 10 placed farther away from a target surface such as a wall and still see the lines or dots generated by the construction laser level 10. Lines and dots produced by the exemplary embodiments of a construction line laser level 10 according to the exemplary embodiments of the present application may be more readily seen in various ambient lighting conditions. The laser levels of the present application may include laser generators of different types, such as a traditional laser diode or a DPSSL.

According to exemplary embodiments of the invention, output laser lines or laser dots for construction layout laser levels may be in a range above the prior art range of 510 to 535 nm, and may be, for example around 555 nanometers (nm). In particular, the wavelength of output laser lines or dots may be 550 - 560 nm; 545 - 565 nm; 540-570 nm; 540-575 nm; 537- 575 nm; or 537-580 nm. These wavelengths This wavelength can be applied to a variety of construction lasers, such as cross-line laser levels; 3 x 360 line laser levels; line and dot combination laser levels and rotary laser levels. Additionally, the wavelengths can be applied using laser diodes or diode-pumped solid-state laser (DPSSL).

The higher wavelength laser may be used in any of a variety of construction laser levels such as cross-line laser levels, 3x360 laser levels, rotary laser levels and line and spot laser levels. These construction laser levels are units that may be used in the construction as with layout or the like. For example, construction laser levels may be used to partition an open space in a commercial building into useable office areas. In this example, the construction laser level generates squared lines on a floor which are in turn used to construct walls or cubicles. At some later time, it may be desirable to transfer the squared lines from the floor to the ceiling or from the ceiling to the floor. In other instances, it may be desirable to generate squared lines on the ceiling and floor simultaneously.

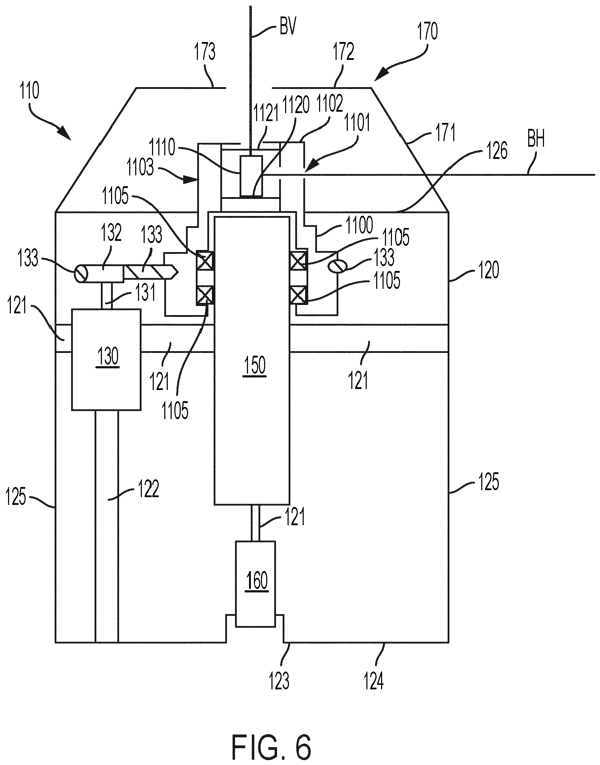

An exemplary embodiment of a rotary laser 110 which may implement the wavelengths as discussed above is shown in Fig. 6. As shown in FIG. 6, a motor 130 is housed in the housing 120. The motor 130 is supported in the housing 120 by supporting structures 121 and 122. These supporting structures 121, 122 hold the motor 130 in place. The motor 130 includes an output shaft 131 which drives a driving pulley 132. The driving pulley 132, in turn, drives belt 133. The belt 133 is connected to the projector housing 1100. The projector housing 1100 is fitted onto a laser tube 150 via bearings 1105. The projector housing is fixed in an axial direction, but is able to rotate about the laser tube 150 via the bearings 1105. Accordingly, when the motor 130 is operated, it turns the output shaft 131, which turns the driving pulley 132. The driving pulley 132 drives the belt 133 which rotates the projector housing 1100 and the components contained therein. In this manner, the projector 1103 is rotated about 360 degrees so that the projected beam forms a line. In this case, the projector 1103 is driven by a belt drive. As will be appreciated, other configurations are possible. For example, the motor 130 could be coupled to drive the projector housing 1100 by a gear drive.

The laser tube 150 supports a laser generator and a lens. The laser tube 150 is supported on the housing 120 by supports 121. The laser generator may be, for example, a laser diode or a DPSSL. As is further seen in FIG. 2, the laser 110 also includes a lower laser tube 160. The lower laser tube 160 includes another laser generator (not shown) which projects a laser beam downward through opening 123 in the bottom 124 of the housing 120. This creates a plumb beam. A prism 1110 is located above the laser tube 150. As will be discussed in greater detail later, the prism 1110 divides a beam from the laser generator 1200 to produce a horizontal beam BH which is projected out of the laser projector at opening 1101 and a vertical beam BV which is projected out of the laser projector at opening 1102. The prism 1110 includes a pentaprism and a wedge portion. The masks 1120 and 1121 are also supported in the projector housing 1100 and help to shape beams.

The beam BH is a horizontal beam and beam BV is a vertical beam when bottom
surface 124 is placed on a flat horizontal surface. In some instances, at least some of the components such as the laser generator 1200, lens and prism 1110 or the projector housing or the projector housing and laser tube 150 may be on a pendulum so that the beam BH remains horizontal when the bottom surface 124 of the housing 120 is placed on a surface that is not level. Also, the pendulum may be selectively locked. As will be appreciated, the beam BH will not be horizontal when the housing 120 is placed on one its sides 125 or if a pendulum is locked and the housing is placed on a sloped surface.

The laser level 110 also includes a protective structure 170. The protective
structure 170 extends from a top 126 of the housing 120 and provides a measure of protection for the projector 1103 against falls or the like. The protective structure 170 includes a number of legs 171 and a roof 172. The roof 172 includes a hole 173, so that the projector 1103 may project a beam upwardly through the hole 173.

The laser generators of the various embodiments as well as the motor of the rotary laser level may be powered by a power source such as a battery. The battery may be a removable battery pack or an integral battery. The removable battery pack may a power tool battery pack that can be used to power other tools such as drills, saws, sanders and the like. The battery or batteries may be rechargeable or replaceable.

Various methods may be carried out involving the use of construction laser levels according to exemplary embodiments of the present application. For example, there may be a method of providing a laser level with a laser generator that outputs a beam in one of the various wavelengths discussed above. The beams may be projected onto target surfaces such as walls, ceilings, floors, beams or other structural elements to provide assistance with layout for construction tasks.

While the invention has been described by way of exemplary embodiments, it is understood that the words which have been used herein are words of description, rather than words of limitation. Additionally, it is understood that various features of the different embodiments may be combined. Changes may be made within the purview of the appended claims, without departing from the scope and spirit of the invention in its broader aspects.

## Claims

1. A construction laser level, comprising:
a housing;
a first laser generator disposed in the housing and operable to generate a first output beam, the first output beam projecting outside of the housing;
a second laser generator disposed in the housing and operable to generate a second output beam, the second output beam projecting outside of the housing;
wherein a wavelength of the first output beam is in the range of 537 to 580 nanometers.

2. The construction laser level of claim 1, wherein a wavelength of the second output beam is in the range of 537 to 580 nanometers.

3. The construction laser level of claim 1, wherein a wavelength of the first output beam is in the range of 540 to 575 nanometers; and wherein a wavelength of the second output beam is in the range of 540 to 575 nanometers.

4. The construction laser level of claim 1, wherein a wavelength of the first output beam is in the range of 545 to 565 nanometers; and wherein a wavelength of the second output beam is in the range of 545 to 565 nanometers.

5. The construction laser level of claim 1, wherein a wavelength of the first output beam is in the range of 550 to 560 nanometers; and wherein a wavelength of the second output beam is in the range of 550 to 560 nanometers.

6. The construction laser level generating device of claim 1, wherein the first output beam is configured to be projected as a first line on a target surface.

7. The construction laser level of claim 6, wherein the second output beam is configured to be projected as a second line on a target surface.

8. The construction laser level of claim 1, wherein the first laser generator comprises a diode-pumped solid-state laser (DPSSL).

9. The construction laser level of claim 8, wherein the second laser generator comprises a diode-pumped solid-state laser (DPSSL).

10. A construction laser level, comprising:
a housing;
a gimbal assembly disposed in the housing;
wherein the gimbal assembly includes a laser generator operable to generate an output beam, the output beam projecting outside of the housing;
wherein the output beam is configured to be projected as a line on a target surface; and
wherein a wavelength of the output beam is in the range of 540 to 575 nanometers.

11. The construction laser level of claim 10, wherein the laser generator comprises a diode-pumped solid-state laser (DPSSL).

12. The construction laser level of claim 11, wherein a wavelength of the output beam is in the range of 545 to 570 nanometers.

13. The construction laser level of claim 12, wherein a wavelength of the output beam is in the range of 550 to 560 nanometers.

14. A construction laser level, comprising:
a housing;
a gimbal assembly disposed in the housing;
wherein the gimbal assembly includes a first laser generator operable to generate a first output beam, the first output beam projecting outside of the housing onto a target surface;
wherein the gimbal assembly includes a second laser generator operable to generate a second output beam, the second output beam projecting outside of the housing onto the target surface;
wherein the first output beam is configured to be projected as a first line on the target surface;
wherein the second output beam is configured to be projected as a second line on the target surface;
wherein the first line is generally perpendicular to the second line;
wherein a wavelength of the first output beam is in the range of 540 to 575 nanometers.

15. The construction laser level of claim 14, wherein a wavelength of the second output beam is in the range of 540 to 575 nanometers.
